# EUROPÄISCHE PATENTSCHRIFT

(11) **EP 3 421 309 B1**
(45) Veröffentlichungstag und Bekanntmachung des Hinweises auf die Patenterteilung: **03.11.2021**
(21) Anmeldenummer: 18175916.8
(22) Anmeldetag: 05.06.2018
(51) Int. Cl.: B60T 8/32, B60T 8/88, B60T 8/175, B60T 8/1755, B60T 8/176, B60T 13/66, B60T 13/68, B60T 8/36, B60T 17/18, B60T 13/26, B60T 8/48

(54) **DRUCKMITTELBETÄTIGTE UND ZUMINDEST TEILWEISE ELEKTRONISCHE BREMSVORRICHTUNG**
BRAKING DEVICE ACTIVATED BY COMPRESSING A MEDIUM AND AT LEAST PARTIALLY ELECTRONIC
DISPOSITIF DE FREINAGE ACTIONNÉ PAR UN AGENT DE PRESSION ET AU MOINS PARTIELLEMENT ÉLECTRONIQUE

(30) Priorität: 21.06.2017 DE 102017113743
(43) Veröffentlichungstag der Anmeldung: 02.01.2019
(73) Patentinhaber: MAN Truck & Bus SE, 80995 München (DE)
(72) Erfinder: Ittlinger, Reinhard, 94363 Oberschneiding (DE); Scherle, Alwin, 85229 Markt Indersdorf (DE)
(74) Vertreter: v. Bezold & Partner Patentanwälte - PartG mbB

(56) Entgegenhaltungen:
- WO-A1-2013/093545
- DE-A1- 10 320 608
- DE-B3-102008 009 043

## Beschreibung

Die Erfindung betrifft eine druckmittelbetätigte und zumindest teilweise elektronische Bremsvorrichtung für ein Fahrzeug mit mindestens zwei Achsen, insbesondere für ein Nutzfahrzeug.

Aus dem Stand der Technik sind gattungsgemäße Bremsvorrichtungen bekannt, aufweisend einen ersten Bremskreis mit mindestens einem ersten Druckregelmodul zur Regelung der Bremsdrücke in Radbremsen der ersten Achse, einen zweiten Bremskreis mit mindestens einem zweiten Druckregelmodul zur Regelung der Bremsdrücke in Radbremsen einer zweiten Achse, einen Bremswertgeber zur Erzeugung eines elektrischen Steuersignals und eine erste Steuereinrichtung, die ausgebildet ist, in Abhängigkeit von dem vom Bremswertgeber erzeugten Steuersignal und von Ausgangssignalen von Raddrehzahlsensoren Bremsdruckvorgaben für das erste und das zweite Druckregelmodul zu erzeugen.

Derartige Bremsvorrichtungen bzw. Bremsanlagen bzw. mehrkreisige Betriebsbremsen werden auch als elektronisch (bremsdruck)geregelte Bremssysteme (EBS) bezeichnet, bei denen die Bremszylinder der Radbremsen durch Druckregelmodule be- oder entlüftet werden.

Eine gattungsgemäße Bremsvorrichtung ist beispielsweise aus der DE 199 23 455 A1 bekannt. Die bekannte Bremsvorrichtung ist insgesamt elektronisch geregelt und verfügt über einen Vorderachsbremskreis mit einem 1-Kanal-Druckregelmodul zur achsweisen Regelung der Bremsdrücke in Radbremsen der Vorderachse sowie über einen Hinterachsbremskreis mit einem 2-Kanal-Druckregelmodul zur radweisen Regelung der Bremsdrücke in Radbremsen der Hinterachse, wodurch ein sog. elektronisches Bremssystem (EBS) verwirklicht wird. Die Druckregelmodule werden von elektrischen Signalen eines Fußbremsmoduls als Bremswertgeber elektrisch gesteuert und verfügen dabei jeweils über eine eigene Steuerelektronik, ein Einlassventil, ein Auslassventil, ein Relaisventil sowie ein Backup-Ventil sowie über einen Drucksensor, um einen mit Hilfe des Drucksensors gemessenen pneumatischen Ist-Bremsdruck auf einen fahrerwunschabhängig gebildeten Soll-Bremsdruck im Sinne einer Druckregelung einregeln zu können. Solche Druckregelmodule sind beispielsweise aus der DE 42 27 084 A1 bekannt.

Die bekannte Bremsvorrichtung weist außerdem auch ein zentrales elektronisches Steuergerät auf, um neben ABS (Antiblockiersystem), ASR (Antriebsschlupfregelung) oder ESP (elektronisches Stabilitätssystem) weitere im Zusammenhang mit elektronischen Bremssystemen heutzutage übliche Funktionen wie etwa Hill-Holder, Tilt-Prevention, Koppelkraftregelung zwischen Zugfahrzeug und Anhänger oder lastabhängige Verzögerungsregelung realisieren zu können. Darüber hinaus verfügen Bremsanlagen in Zugfahrzeugen meist auch über ein Anhängersteuermodul, um die Bremsen eines Anhängers vom Zugfahrzeug aus elektrisch und pneumatisch steuern zu können.

Derartige gattungsgemäße Bremsvorrichtungen, wie sie beispielsweise auch aus der WO 2013/093545 A1 bekannt sind, weisen vorrangige elektro-pneumatische Bremskreise sowie nachrangige rein pneumatische Rückhaltkreise als unterlegte Sicherheitsebene auf. Nachteilig hieran ist, dass das rein pneumatische Backup-System keine vollwertige Antiblockierfunktion (ABS), Fahrdynamik-(ESP-)Regelung und/oder Antriebsschlupfregelung ermöglicht.

Um bei einem Fehlerfall auch weiterhin höhere Funktionen wie z. B. ABS zu ermöglichen, schlägt die DE 103 20 608 A1 eine Bremsanlage mit mindestens zwei, galvanisch voneinander getrennten, elektrischen bzw. elektronischen Bremssteuerkreisen vor. Im Detail umfasst die hierzu vorgeschlagene Bremsanlage mindestens einen ersten und mindestens einen zweiten Bremskreis, die über ein Fußbremsventil elektrisch ansteuerbar sind, wobei die beiden Bremskreise jeweils einen elektrischen Steuerkreis mit jeweils einer Steuerelektronik und einer eigenen Energieversorgungseinrichtung und durch die Steuerelektroniken ansteuerbare Bremsbetätigungseinrichtungen aufweisen. Weiterhin ist mindestens eine der Bremsbetätigungseinrichtungen von mehr als einer Steuerelektronik ansteuerbar, wobei der erste Bremskreis ein Betriebsbremskreis ist und der zweite Bremskreis die Funktion des ersten Bremskreises im regelmäßigen Wechsel gesteuert durch die Steuerelektroniken übernimmt und der nicht aktive Bremskreis jeweils überprüft wird.

Weiterhin ist aus der DE 10 2008 009 043 B3 ein elektronisch geregeltes Bremssystem eines für den Anhängerbetrieb vorgesehenen Zugfahrzeugs bekannt, welches mindestens einen ersten elektrischen Bremssteuerkreis und einen zweiten elektrischen Bremssteuerkreis umfasst. Hierbei ist vorgesehen, dass in einem Zugfahrzeug ohnehin vorhandene Komponenten wie beispielsweise ein Anhängersteuermodul oder ein Parkbremsmodul für eine Druckmittelsteuerung von Bremsaktuatoren eingesetzt werden, welche von einem gestörten elektrischen Bremskreis nicht mehr angesteuert werden können.

Aus dem Stand der Technik sind ferner Kraftfahrzeuge bekannt, die in einem autonomen Fahrmodus betreibbar sind, in welchem das Kraftfahrzeug mithilfe eines Fahrerassistenzsystems selbsttätig eine sowohl eine Längsführung als auch eine Querführung des Kraftfahrzeugs umfassende Fahrzeugführung durchführt.

Ist ein Fahrzeug in der Lage, automatisiert zu fahren, so kann sich das Fahrzeug in unterschiedlichen Modi bewegen. Es ist davon auszugehen, dass auch Fahrzeuge, die hoch- und vollautomatisiert fahren können, in niedrigeren Stufen der Automatisierung fahren können. Gemäß einer Einteilung des deutschen Verbands der Automobilindustrie e.V. (VDA) können die unterschiedlichen Modi in die folgenden Stufen eingeteilt werden:
- Stufe 0: Manuelle Fahrt (Stufe 0);
- Stufe 1: Assistierte Fahrt (z. B. mit ACC);
- Stufe 2: Teilautomatisierte Fahrt (z. B. Staupilot mit kurzzeitiger Übernahme Längs- und Querführung);
- Stufe 3: Hochautomatisierte Fahrt (erlaubt Nebentätigkeiten; Übernahme des Fahrzeugs innerhalb ca. 10 Sek. nötig);
- Stufe 4: Vollautomatisierte Fahrt (erlaubt Nebentätigkeiten, Fahrzeug muss im Notfall selbst in der Lage sein, sicher zum Stehen zu kommen).

Ein Nachteil der aus dem Stand der Technik bekannten elektronischen Bremssysteme mit vorrangigen elektro-pneumatischen Bremskreisen sowie nachrangigen rein pneumatischen Rückhaltkreisen als unterlegte Sicherheitsebene ist, dass diese nicht für den Einsatz in Fahrzeugen mit autonomem Fahrmodus geeignet sind, da der Fahrer sich unter Umständen einer Nebentätigkeit während des autonomen Fahrmodus widmen und somit nicht schnell genug bei Ausfall des elektro-pneumatischen Bremskreises reagieren könnte, um z. B. durch Betätigung des Fußbremsmoduls den pneumatischen Rückhaltekreis zu betätigen.

Aus der Offenlegungsschrift DE 103 57 373 A1 ist ein elektronisches Bremssystem (EBS) bekannt, das vorschlägt, eine redundante elektronische Steuerung des elektopneumatischen Bremskreises vorzusehen, um einen Fehler, z. B. Ausfall des Zentralsteuergeräts, kompensieren zu können. Hierzu wird vorgeschlagen, eine Redundanz auf dem 1-Kanal-Druckregelmodul vorzusehen, derart, dass das 1-Kanal-Druckregelmodul eine redundante CAN Anbindung und eine redundante Stromversorgung erhält, um das 1-Kanal-Druckregelmodul dann als Redundanzsteuergerät verwenden zu können. Ein Nachteil hieran ist, dass hierzu keine gängigen, marktüblichen Druckregelmodule eingesetzt werden können, sondern deren Steuerplatine entsprechend erweitert werden muss, was mit höheren Bauteilekosten und Entwicklungsaufwänden verbunden ist.

Der Erfindung liegt demgegenüber die Aufgabe zugrunde, eine druckmittelbetätigte und zumindest teilweise elektronische Bremsvorrichtung bereitzustellen, mit der Nachteile bekannter Bremsvorrichtungen vermieden werden können. Es ist insbesondere eine Aufgabe der Erfindung, eine derartige Bremsvorrichtung bereitzustellen, die auch für den Einsatz in einem Fahrzeug mit einem autonomen Fahrmodus geeignet ist und/oder die mit möglichst geringen Kosten ausgehend von den bekannten Bremsvorrichtungen realisierbar ist.

Diese Aufgaben werden durch eine Vorrichtung mit den Merkmalen des unabhängigen Anspruchs 1 gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem allgemeinen Gesichtspunkt der Erfindung wird eine druckmittelbetätigte und zumindest teilweise elektronische Bremsvorrichtung für ein Fahrzeug mit mindestens zwei Achsen bereitgestellt. Das Fahrzeug kann ein Nutzfahrzeug sein.

Die Bremsvorrichtung umfasst in an sich bekannter Weise einen ersten Bremskreis mit mindestens einem ersten Druckregelmodul zur Regelung der Bremsdrücke in Radbremsen der ersten Achse und einen zweiten Bremskreis mit mindestens einem zweiten Druckregelmodul zur Regelung der Bremsdrücke in Radbremsen einer zweiten Achse sowie einen Bremswertgeber zur Erzeugung eines elektrischen Steuersignals. Die Bremsvorrichtung umfasst ferner eine erste Steuereinrichtung, die ausgebildet ist, in Abhängigkeit von dem vom Bremswertgeber erzeugten Steuersignal und von Ausgangssignalen von Raddrehzahlsensoren Bremsdruckvorgaben für das erste und das zweite Druckregelmodul zu erzeugen. Die erste Steuereinrichtung wird nachfolgend auch als primäre EBS-Steuerung oder Primärsteuergerät bezeichnet.

Bei der Bremsvorrichtung handelt es sich somit um eine mehrkreisige Betriebsbremse, die auch als elektronisch (bremsdruck)geregeltes Bremssystem (EBS) bezeichnet wird, bei dem die Bremszylinder der Radbremsen durch Druckregelmodule be- oder entlüftet werden. Die Bremsvorrichtung umfasst mindestens einen druckmittelbetätigten, insbesondere druckluftbetätigten Betriebsbremszylinder.

Bei den Druckregelmodulen handelt es sich um elektrisch angesteuerte Ventileinrichtungen, die jeweils über eine eigene Steuerelektronik, ein Einlassventil, ein Auslassventil, ein Relaisventil sowie ein Backup-Ventil sowie über einen Drucksensor verfügen, um einen mit Hilfe des Drucksensors gemessenen pneumatischen Ist-Bremsdruck auf einen Soll-Bremsdruck, z. B. einen fahrerwunschabhängig gebildeten Soll-Bremsdruck, im Sinne einer Druckregelung einregeln zu können. Hierbei kann die erste Steuereinrichtung ausgeführt sein, aus dem Wert bzw. elektrischen Signal des Pedalwertgebers eine Fahrzeugsollverzögerung zu bestimmen und diese in eine Bremsdruckvorgabe (Soll-Bremsdruck) umzusetzen, die dann an die Druckregelmodule übermittelt wird, welche dann den Bremsdruck an den Bremszylindern entsprechend dieser Bremsdruckvorgabe einregeln.

Erfindungsgemäß sind in dem ersten Bremskreis und/oder dem zweiten Bremskreis jeweils zwei elektrisch ansteuerbare Drucksteuerventile angeordnet, wobei jedem Bremszylinder einer Achse bzw. Rades eines der beiden Drucksteuerventile zugeordnet ist. Die Drucksteuerventile sind in der Druckmittelbremsleitung zwischen Druckregelmodul und Bremszylinder angeordnet.

Ferner ist eine zweite Steuereinrichtung vorgesehen, die ausgebildet ist, lediglich bei Ausfall der ersten Steuereinrichtung die zwei Drucksteuerventile einer Achse in Abhängigkeit von Ausgangssignalen der Raddrehzahlsensoren zur Ausbildung einer Antiblockierfunktion (ABS), Fahrdynamik-(ESP-)Regelung und/oder Antriebsschlupfregelung anzusteuern. Die zweite Steuereinrichtung wird nachfolgend auch als sekundäre ABS-Steuerung oder Sekundärsteuergerät bezeichnet, in welcher ebenfalls die ABS-Funktionalität, die Funktionalität zur Fahrdynamik-(ESP-)Regelung und/oder Antriebsschlupfregelung implementiert ist. Mittels der zweiten Steuereinrichtung können somit die Drucksteuerventile direkt im Fehlerfall, insbesondere bei Ausfall der ersten Steuereinrichtung, angesteuert werden, so dass ein elektronisch ansteuerbares Backup- bzw. Redundanzsystem bereitgestellt wird, das sich auch für den Einsatz mit autonom betreibbaren Fahrzeugen oder Fahrzeuglängsregelsystemen eignet.

Im Betrieb der ersten Steuereinrichtung kann die zweite Steuereinrichtung inaktiv sein, d. h., sie muss nicht zur Bremssteuerung eingesetzt werden. Bei der zweiten Steuereinrichtung kann es sich im Vergleich zu der primären EBS-Steuerung um eine vergleichsweise einfache sog. ABS-Steuerung mit geringerem Funktionsumfang handeln. Die zweite Steuereinrichtung kann insbesondere ausgebildet sein, die von einem Bremswertgeber erzeugten Bremsdrücke für die Vorderachse und/oder die Hinterachse jeweils durch die Drucksteuerventile fahrerunabhängig so zu verändern, dass lediglich eine rad- oder achsweise Bremsschlupfregelung (ABS) mittels Drucksenken, Druckhalten oder Drucksteigern bis zur Höhe des Basisdrucks verwirklicht werden kann. Die Bremsschlupfregelung erfolgt dabei vorzugsweise durch zyklisches Drucksteigern, Druckhalten und Drucksenken in bekannter Weise. Die zweite Steuereinrichtung erhält dabei die benötigte Information über den gerade vorliegenden Bremsschlupf bzw. die momentane Fahrzeuggeschwindigkeit über die Raddrehzahlsensoren 13, 23.

Im Unterschied zur primären EBS-Steuerung erzeugt sie somit keine Bremsdruckvorgabe, sondern direkt elektrische Ansteuersignale der Drucksteuerventile, um diese zu schließen oder zu öffnen.

Ein weiterer Vorteil ist, dass herkömmliche Druckregelmodule verwendet werden können, die bei Ausfall der ersten Steuereinrichtung und im Rahmen der Bremssteuerung durch die zweite Steuereinrichtung lediglich rein pneumatisch als Relaisventil betrieben werden, was nachfolgend noch detaillierter beschrieben wird.

Ein besonderer Vorzug des erfindungsgemäßen Ansatzes ist daher, dass herkömmliche elektronische Bremssysteme nur durch Hinzufügen von üblichen Komponenten erweitert werden können, um eine vollwertige ABS- und/oder ESP-Funktionalität bei Ausfall des Primärbremssystems gewährleisten zu können.

Die von der zweiten Steuereinrichtung elektrisch angesteuerten Drucksteuerventile sind vorzugsweise als Magnetventile, Durchgangsventile, Stromschaltventile und/oder 2/2-WegeVentile ausgeführt.

Gemäß einer Ausführungsform kann das erste Druckregelmodul und/oder das zweite Druckregelmodul als ein 1-Kanal-Druckregelmodul zur achsweisen Regelung der Bremsdrücke in Radbremsen der zugeordneten Achse ausgebildet sein, welches einen gemeinsamen Bremsdruck für die Räder der zugeordneten Achse einregelt. Das Druckregelmodul der ersten Achse bzw. des ersten Bremskreises kann somit als 1-Kanal-Druckregelmodul ausgeführt sein. Ebenfalls kann das Druckregelmodul der zweiten Achse bzw. des zweiten Bremskreises somit als 1-Kanal-Druckregelmodul ausgeführt sein.

Ferner kann in beiden von dem 1-Kanal-Druckregelmodul ausgesteuerten Druckmittel-Bremsleitungen jeweils eines der Drucksteuerventile angeordnet sein, wobei die erste Steuereinrichtung ausgebildet ist, die Drucksteuerventile zur Ausbildung einer Antiblockierfunktion (ABS), Fahrdynamik-(ESP-)Regelung und/oder Antriebsschlupfregelung anzusteuern, da bekanntermaßen über ein 1-Kanal-Druckregelmodul keine radweise, sondern nur eine achsweise Regelung der Bremsdrücke möglich ist. In einem primären Betriebsmodus, d. h. bei ordnungsgemäß arbeitender erster Steuereinrichtung steuert diese somit nicht nur das oder die 1-Kanal-Druckregelmodule, sondern auch die zugeordneten Drucksteuerventile. In einem sekundären Betriebsmodus, d. h. im Fehlerfall, insbesondere bei Ausfall, der ersten Steuereinrichtung werden die Drucksteuerventile dann stattdessen von der zweiten Steuereinrichtung angesteuert.

Gemäß einer weiteren Ausführungsform kann das mindestens eine erste Druckregelmodul und/oder das mindestens eine zweite Druckregelmodul als ein 2-Kanal-Druckregelmodul zur radweisen Regelung der Bremsdrücke in Radbremsen der zugeordneten Achse ausgebildet sein, wobei je ein Kanal den Bremsdruck für einen Bremszylinder der zugeordneten Achse regelt.

Ferner besteht die Möglichkeit, dass das mindestens eine erste Druckregelmodul als zwei 1-Kanal-Druckregelmodule zur radweisen Regelung der Bremsdrücke in Radbremsen der zugeordneten Achse ausgebildet ist, deren Kanal jeweils den Bremsdruck für einen Bremszylinder der zugeordneten Achse regelt. Ferner kann das mindestens eine zweite Druckregelmodul als zwei 1-Kanal-Druckregelmodule zur radweisen Regelung der Bremsdrücke in Radbremsen der zugeordneten Achse ausgebildet sein, deren Kanal jeweils den Bremsdruck für einen Bremszylinder der zugeordneten Achse regelt

Die Ausführung des Druckregelmoduls als ein einer Achse bzw. einem Bremskreis zugeordnetes 2-Kanal-Druckregelmodul oder alternativ als zwei einer Achse bzw. einem Bremskreis zugeordneten 1-Kanal-Druckregelmodule bietet den Vorzug, dass eine radweise Regelung der Bremsdrücke möglich ist.

Bei einer vorteilhaften Variante der Ausführungsformen des Druckregelmoduls als ein 2-Kanal-Druckregelmodul oder als zwei 1-Kanal-Druckregelmodule eines Bremskreises sind vorzugsweise in jeder der vom 2-Kanal-Druckregelmodul oder den beiden 1-Kanal-Druckregelmodulen ausgesteuerten Bremsleitungen eines der von der zweiten Steuereinrichtung angesteuerten Drucksteuerventile angeordnet. Hierbei ist die erste Steuereinrichtung vorzugsweise ausgebildet, zur Ausbildung einer Antiblockierfunktion (ABS), Fahrdynamik-(ESP-)Regelung und/oder Antriebsschlupfregelung lediglich das 2-Kanal-Druckregelmodul oder die beiden 1-Kanal-Druckregelmodule anzusteuern, wobei die beiden Drucksteuerventile fortlaufend auf Durchlassstellung geschaltet sind.

Mit anderen Worten erfolgt in dem primären Betriebsmodus, d. h. einem Betriebsmodus, wo die erste Steuereinrichtung ordnungsgemäß arbeitet, die Ausbildung einer Antiblockierfunktion (ABS) Fahrdynamik-(ESP-)Regelung und/oder Antriebsschlupfregelung über die Ansteuerung der Druckregelmodule durch die erste Steuereinrichtung. Hierzu sind die beiden Drucksteuerventile vorzugsweise fortlaufend auf Druchlass geschaltet.

Im sekundären Betriebsmodus, d. h. bei Ausfall der ersten Steuereinrichtung, erfolgt die Ausbildung einer Antiblockierfunktion (ABS), Fahrdynamik-(ESP-)Regelung und/oder Antriebsschlupfregelung über die Ansteuerung der Drucksteuerventile durch die zweite Steuereinrichtung, während die Druckregelmodule vorzugsweise rein pneumatisch als Relaisventile arbeiten.

Gemäß einer weiteren Ausführungsform können das erste Druckregelmodul und das zweite Druckregelmodul jeweils als ein 1-Kanal-Druckregelmodul zur achsweisen Regelung der Bremsdrücke in Radbremsen der zugeordneten Achse ausgebildet sein, welche jeweils einen gemeinsamen Bremsdruck für die Räder der zugeordneten Achse einregeln, wobei das erste und zweite Druckregelmodul zu einer baulichen Einheit zusammengefasst sind. Eine derartige an sich bekannte Kombination zweier 1-Kanaldruckregelmodule bildet somit ein 2-Kanal-Druckregelmodul aus, das zweikreisig aufgebaut ist, mit einer ersten Versorgungsleitung für den ersten Bremskreis und einer hiervon getrennten Versorgungsleitung für den zweiten Bremskreis und einem ersten Kanal für die erste Achse und einem zweiten Kanal für die zweite Achse.

Ferner ist in den beiden vom einem Druckregelmodul ausgesteuerten Druckmittel-Bremsleitungen jedes der beiden 1-Kanal-Druckregelmodule jeweils eines der Drucksteuerventile angeordnet, so dass den Bremszylindern der ersten Achse und den Bremszylinder der zweiten Achse jeweils ein Drucksteuerventil zugeordnet ist. Die erste Steuereinrichtung ist hierbei in an sich bekannter Weise ausgebildet, in einem primären Betriebsmodus die Drucksteuerventile zur Ausbildung einer Antiblockierfunktion (ABS), Fahrdynamik-(ESP-) Regelung und/oder Antriebsschlupfregelung anzusteuern.

Erfindungsgemäß ist die zweite Steuereinrichtung ausgebildet, lediglich bei Ausfall der ersten Steuereinrichtung die beiden Drucksteuerventile der ersten Achse und/oder die beiden Drucksteuerventile der zweiten Achse in Abhängigkeit von Ausgangssignalen der Raddrehzahlsensoren zur Ausbildung einer Antiblockierfunktion (ABS), Fahrdynamik-(ESP-)Regelung und/oder Antriebsschlupfregelung anzusteuern.

Der erste Bremskreis kann ein Vorderachsbremskreis und die erste Achse eine Vorderachse sein, und der zweite Bremskreis kann hierbei ein Hinterachsbremskreis und die zweite Achse eine Hinterachse sein.

Alternativ kann der erste Bremskreis ein Hinterachsbremskreis und die erste Achse eine Hinterachse sein, und der zweite Bremskreis kann hierbei ein Vorderachsbremskreis und die zweite Achse eine Vorderachse sein.

Die Bremsvorrichtung kann zusätzlich zu den vorrangigen elektro-pneumatischen Bremskreisen nachrangige rein pneumatische Rückhaltkreise als unterlegte Sicherheitsebene aufweisen.

Die Bremsvorrichtung kann ein von der zweiten Steuereinrichtung elektrisch ansteuerbares erstes Steuerventil, das eingangsseitig mit einer Druckmittelquelle des ersten Bremskreises fluidisch koppelbar ist und das ausgangsseitig mit einer pneumatischen Backup-Leitung und/oder pneumatischen Steuereingang des ersten Druckregelmoduls koppelbar ist, aufweisen. Die Bremsvorrichtung kann ferner ein von der zweiten Steuereinrichtung elektrisch ansteuerbares zweites Steuerventil, das eingangsseitig mit einer Druckmittelquelle des zweiten Bremskrei-ses fluidisch koppelbar ist und das ausgangsseitig mit einer Backup-Leitung und/oder einem pneumatischen Steuereingang des zweiten Druckregelmoduls koppelbar ist, aufweisen

Das erste und das zweite Steuerventil sind Redundanzventile zur Druckeinsteuerung, über die verschiedene Drucklevel eingesteuert werden können. Die zweite Steuereinrichtung ist vorzugsweise ausgebildet, das erste Druckregelmodul bei Ausfall der ersten Steuereinrichtung mittelbar über das erste Steuerventil rein pneumatisch als Relaisventil zu betreiben und/oder das zweite Druckregelmodul bei Ausfall der ersten Steuereinrichtung mittelbar über das zweite Steuerventil rein pneumatisch als Relaisventil zu betreiben.

Auf diese Weise können die Druckregelmodule bei Ausfall der ersten Steuereinrichtung von der zweiten Steuereinrichtung als Relaisventile mittelbar rein pneumatisch gesteuert werden.

Gemäß einem weiteren Aspekt kann die zweite Steuereinrichtung eine von der ersten Steuereinrichtung autonome, d. h. unabhängige, Spannungsversorgung aufweisen. Dadurch kann die Ausfallsicherheit der zweiten Steuereinrichtung erhöht werden.

Ferner ist vorzugsweise weder das erste noch das zweite Druckregelmodul mit der zweiten Steuereinrichtung zu einer baulichen Einheit zusammengefasst. Die zweite Steuereinrichtung ist vorzugsweise nicht ausgebildet, ein vom Bremswertgeber erzeugtes Steuersignal zu empfangen. Gemäß einer alternativen Variante kann die zweite Steuereinrichtung ausgebildet sein, das Signal des Bremswertgebers einzulesen. Ferner kann die zweite Steuereinrichtung ausgebildet sein, keine Bremsdruckvorgabe für das erste und/oder das zweite Druckregelmodul zu erzeugen.

Ferner kann die Bremsvorrichtung so ausgeführt sein, beispielsweise mittels eines Abzweigs (T-Stück), dass die Ausgangssignale der Drehzahlsensoren der ersten Achse primär am ersten Druckregelmodul und sekundär an der zweiten Steuereinrichtung eingelesen und/ oder die Ausgangssignale der Drehzahlsensoren der zweiten Achse primär am zweiten Druckregelmodul und sekundär an der zweiten Steuereinrichtung eingelesen werden. Mittels der Raddrehzahlsensoren an den Achsen werden auch die durch den Bremsdruck an den Achsen hervorgerufene Bremswirkung gemessen und in die Druckregelmodule und die zweite Steuereinrichtung eingesteuert.

Der Bremswertgeber kann ein Fußbremsventil oder Fußbremsmodul umfassen, welches abhängig von einer Betätigung durch den Fahrer direkt Bremsdrücke für Radbremsen einer Achse und das elektrische Steuersignal erzeugt. Das Fußbremsmodul kann ein zweikanaliges pneumatisches Fußbremsventil FBV sein, welches abhängig von einer Betätigung durch den Fahrer für einen Vorderachsbremskreis Steuer- bzw. Backup-Drücke für Radbremsen einer Vorderachse sowie für einen Hinterachsbremskreis Steuer- bzw. Backup-Drücke für Radbremsen einer Hinterachse erzeugt. Der vom Fußbremsventil erzeugte Backup-Druck wird über eine Druckleitung dem ersten Druckregelmodul und eine weitere Druckleitung dem zweiten Druckregelmodul zugeführt.

Der Bremswertgeber kann ein Fahrzeuglängsregelungssystem eines Fahrzeugs, insbesondere eines autonom betreibbaren Fahrzeugs, sein.

Gemäß einer weiteren Ausführungsform kann die Bremsvorrichtung ein Anhängersteuermodul umfassen, mittels dessen die Bremsen eines Anhängers vom Zugfahrzeug aus pneumatisch steuerbar sind, wobei die zweite Steuereinrichtung ausgebildet ist, das Anhängersteuermodul über ein elektrisch ansteuerbares Steuerventil, z. B. ein Magnetventil, pneumatisch zu steuern, das in einer pneumatischen Backup-Leitung des ersten oder zweiten Bremskreises zur Versorgung des Anhängersteuermoduls angeordnet ist. Auf diese Weise kann eine redundante elektrische Ansteuerung der Anhängerbremsen realisiert werden.

Die Erfindung betrifft ferner ein Kraftfahrzeug, insbesondere Nutzfahrzeug, mit einer Bremsvorrichtung, wie in diesem Dokument beschrieben, Das Kraftfahrzeug ist vorzugsweise ein Kraftfahrzeug, das in einem autonomen Fahrmodus betreibbar ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: einen schematischen Schaltplan einer bevorzugten Ausführungsform der Bremsvorrichtung; und
- Figur 2A-2D: stark schematisiert weitere Ausführungsvarianten basierend auf unterschiedlichen Ausführungen der Druckregelmodule.

Gleiche oder funktional äquivalente Elemente sind in allen Figuren mit denselben Bezugszeichen bezeichnet und zum Teil nicht gesondert beschrieben. In den Figuren bezeichnen durchgezogene Leitungen Pneumatikleitungen, gestrichelte Leitungen elektrische Steuerleitungen der ersten Steuereinrichtung 100 und gepunktete Leitungen elektrische Steuerleitungen der zweiten Steuereinrichtung 200.

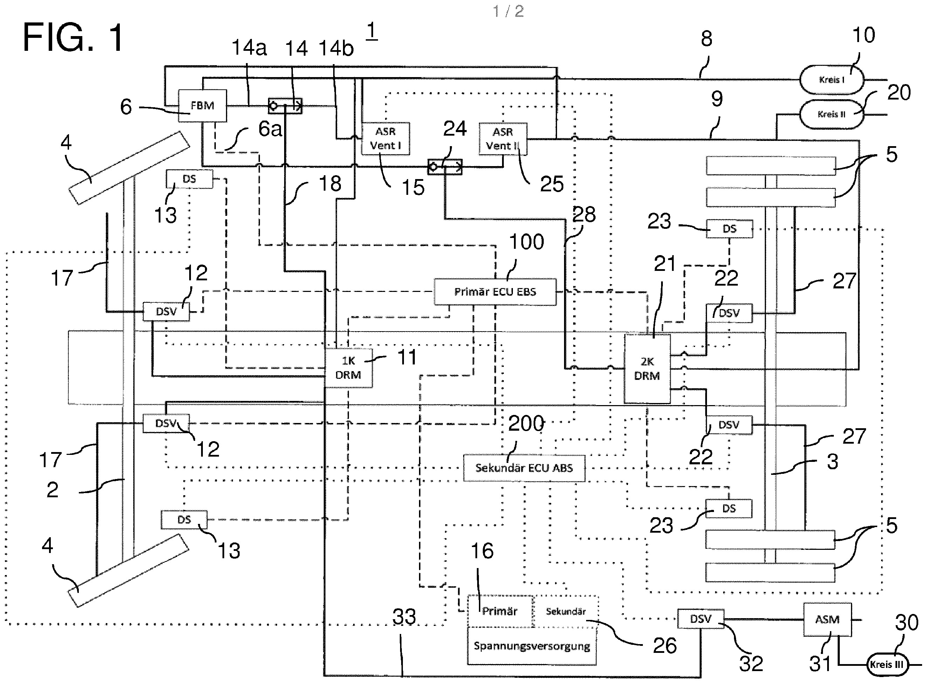

Figur 1 zeigt einen schematischen Schaltplan einer bevorzugten Ausführungsform der Bremsvorrichtung.

Die druckmittelbetätigte und zumindest teilweise elektronische Bremsvorrichtung 1 eines Nutzfahrzeugs umfasst einen der Vorderachse 2 zugeordneten ersten Bremskreis mit einem 1-Kanal-Druckregelmodul 11 zur achsweisen Regelung der Bremsdrücke in Radbremsen der ersten Achse 2. Die als Bremszylinder ausgeführten Radbremsen sind in Figur 1 nicht gezeigt, können jedoch in herkömmlicher und bekannter Weise ausgeführt sein, z. B. als ein Betriebsbremszylinder eines auch einen Federspeicherbremszylinder beinhaltenden Kombizylinders.

Die elektro-pneumatische Bremsvorrichtung 1 umfasst ferner einen der Hinterachse 3 zugeordneten zweiten Bremskreis 20 mit einem 2-Kanal-Druckregelmodul 21 zur Regelung der Bremsdrücke in Radbremsen der Hinterachse 3.

Die Bremsvorrichtung 1 umfasst ferner einen Bremswertgeber 6 zur Erzeugung eines elektrischen Steuersignals, ausgeführt als Fußbremsmodul (FBM). Das FBM 6 ist als zweikanaliges pneumatisches Fußbremsventil ausgeführt, welches abhängig von einer Betätigung durch den Fahrer für einen Vorderachsbremskreis 10 Steuer- bzw. Backup-Drücke für Radbremsen der Vorderachse 2 sowie für einen Hinterachsbremskreis Steuer- bzw. Backup-Drücke für Radbremsen der Hinterachse 3 erzeugt. Hierzu werden dem FBM 6 über Vorratsleitungen 8, 9 Druckluft unter Vorratsdruck aus dem Vorderachs-Druckluftvorrat und dem Hinterachs-Druckluftvorrat zugeführt.

Im Einzelnen wird der vom FBM 6 erzeugte Backup-Druck über eine Druckleitung 28 dem 2-Kanal-Druckregelmodul 21 der Hinterachse 3 zugeführt, welches druckgesteuert durch den Steuer- bzw. Backup-Druck je Seite einen Hinterachs-Bremsdruck für einen Bremszylinder, z. B. einen Betriebsbremszylinder eines auch einen Federspeicherbremszylinder beinhaltenden Kombizylinders, über die Bremsleitungen 27 aussteuert. Die pneumatisch durch den Backup-Druck gesteuerte Bildung des Hinterachs-Bremsdrucks ist jedoch nachrangig in Bezug zu einer elektrischen Steuerung des 2-Kanal-Druckregelmoduls 21 durch ein elektronisches Steuergerät (Primärsteuergerät, erste Steuereinrichtung) 100. Hierzu wird bevorzugt durch das FBM 6 in Abhängigkeit von seiner Betätigung durch den Fahrer ein elektrisches Signal erzeugt, welches dann über eine elektrische Leitung 6a in das Primärsteuergerät 100 eingesteuert wird. Dieses steuert dann wiederum abhängig von den elektrischen Signalen das 2-Kanal-Druckregelmodul 21 an, um aus dem über eine Vorratsleitung aus dem Druckluftvorrat des Hinterachsbremskreises 20 herangeführten Vorratsdruck einen Hinterachs-Bremsdruck zu modulieren.

Das 2-Kanal-Druckregelmodul 21 verfügt über eine eigene Steuerelektronik und für jeden Kanal (rechte Seite, linke Seite) jeweils über ein Einlassventil, ein Auslassventil, ein Relaisventil, ein Backup-Ventil sowie über einen Drucksensor, um einen mit Hilfe des Drucksensors gemessenen pneumatischen Ist-Hinterachs-Bremsdruck auf einen durch das vom elektronischen Primärsteuergerät 100 ausgesteuerte elektrische Signal repräsentierten Soll-Hinterachs-Bremsdruck im Sinne einer Druckregelung einregeln zu können.

An den Rädern 4, 5 der Vorderachse 2 und der Hinterachse 3 sind Raddrehzahlsensoren 13, 23 angeordnet, deren Ausgangssignale mittels eines Abzweigs (T-Stück) primär an den Druckregelmodulen 11, 21 und sekundär an einer zweiten Steuereinrichtung 200 (Sekundärsteuergerät) eingelesen werden.

In den beiden Druckluft-Bremsleitungen 27 des Hinterachsbremskreises 20 ist ferner jeweils ein Drucksteuerventil 22 in Form eines einfachen Magnetventils zusätzlich verbaut. Die Drucksteuerventile 22 werden in einem primären Betriebsmodus, d. h. bei ordnungsgemäß arbeitendem Primärsteuergerät 100, nicht benötigt und sind von dem Sekundärsteuergerät 200 (zweite Steuereinrichtung) 200 auf Durchlass geschaltet, so dass sie einfach nur durchströmt werden.

Das Sekundärsteuergerät 200 ist eingerichtet, lediglich bei Ausfall des Primärsteuergeräts 100 die zwei Drucksteuerventile 22 in Abhängigkeit von Ausgangssignalen der Raddrehzahlsensoren 23 zur Ausbildung einer Antiblockierfunktion (ABS), Fahrdynamik-(ESP-)Regelung und/oder Antriebsschlupfregelung anzusteuern.

Die Steuerung des Vorderachsbremskreises 10 erfolgt analog, mit dem Unterschied, dass in dem gezeigten Ausführungsbeispiel der Figur 1 das Druckregelmodul der Vorderachse 2 als 1-Kanaldruckregelmodul ausgeführt ist, so dass keine radweise, sondern nur eine achsweise Regelung der Bremsdrücke in Radbremsen der Vorderachse 2 mittels des 1-Kanal-Druckregelmoduls 11 möglich ist, welches einen gemeinsamen Bremsdruck für die Räder der Vorderachse 2 einregelt.

Der vom FBM 6 erzeugte Backup-Druck wird über eine Druckleitung 18 dem 1-Kanal-Druckregelmodul 11 der Vorderachse 2 zugeführt, welches druckgesteuert durch den Steuer- bzw. Backup-Druck einen Vorderachs-Bremsdruck für die Bremszylinder der Vorderachse über die Bremsleitungen 17 aussteuert. Die pneumatisch durch den Backup-Druck gesteuerte Bildung des Vorderachs-Bremsdrucks ist wiederum nachrangig in Bezug zu einer elektrischen Steuerung des 1-Kanal-Druckregelmoduls 11 durch das Primärsteuergerät (erste Steuereinrichtung) 100. Hierzu steuert dann das Primärsteuergerät 100 abhängig von den vom FBM 6 erzeugten elektrischen Signalen das 1-Kanal-Druckregelmodul 11 an, um aus dem über eine Vorratsleitung aus dem Druckluftvorrat des Vorderachsbremskreises 10 herangeführten Vorratsdruck einen Vorderachs-Bremsdruck zu modulieren.

Das 1-Kanal-Druckregelmodul 11 verfügt ebenfalls über eine eigene Steuerelektronik und über ein Einlassventil, ein Auslassventil, ein Relaisventil, ein Backup-Ventil sowie über einen Drucksensor, um einen mit Hilfe des Drucksensors gemessenen pneumatischen Ist-Vorderachs-Bremsdruck auf einen durch das vom elektronischen Primärsteuergerät 100 ausgesteuerte elektrische Signal repräsentierten Soll-Vorderachs-Bremsdruck im Sinne einer Druckregelung einregeln zu können.

Zur radweisen Regelung der Bremsdrücke in Radbremsen der Vorderachse 2 sind ferner zwei Drucksteuerventile 12 in Form einfacher Magnetventile in den Bremsleitungen 17 des 1-Kanal-Druckregelmoduls 11 angeordnet.

Das Primärsteuergerät 100 ist ausgebildet, die Drucksteuerventile 12 zur Ausbildung einer Antiblockierfunktion (ABS), Fahrdynamik-(ESP-)Regelung und/oder Antriebsschlupfregelung anzusteuern.

Falls keine elektrische Steuerung durch das Primärsteuergerät 100, beispielsweise wegen einer Störung, erfolgen kann, dann übernimmt das Sekundärsteuergerät 200 die Bremssteuerung. In diesem sekundären Betriebsmodus werden die Drucksteuerventile 12 der Vorderachse anstatt durch das Primärsteuergerät 100 nun von dem Sekundärsteuergerät 200 in Abhängigkeit von Ausgangssignalen der Raddrehzahlsensoren 13 zur Ausbildung einer Antiblockierfunktion (ABS), Fahrdynamik-(ESP-)Regelung und/oder Antriebsschlupfregelung angesteuert.

Die Drucksteuerventile 12 werden über Abzweige entweder über das Primärsteuergerät 100 oder über das Sekundärsteuergerät 200 angesteuert, analog zur Drehzahlauswertung.

Das Sekundärsteuergerät 200 hat eine Spannungsversorgung 126, die von der Spannungsversorgung 16 des Primärsteuergeräts autonom ist.

Das Sekundärsteuergerät 200 ist ausgebildet, bei Ausfall des Primärsteuergeräts 100 ferner die beiden elektrisch ansteuerbaren Steuerventile 15 und 25 anzusteuern. Hierbei handelt es sich um Redundanzventile zur Druckeinsteuerung. Das Steuerventil 15 ist eingangsseitig mit einer Druckmittelquelle des ersten Bremskreises 10 pneumatisch koppelbar und ausgangsseitig mit der pneumatischen Backup-Leitung 18 und/oder dem pneumatischen Steuereingang des 1-Kanal- Druckregelmoduls 11 koppelbar. Das Steuerventil 25 ist eingangsseitig mit einer Druckmittelquelle des zweiten Bremskreises 20 fluidisch koppelbar und ausgangsseitig mit der pneumatischen Backup-Leitung 28 und/oder dem pneumatischen Steuereingang des 2-Kanal- Druckregelmoduls 21 koppelbar.

Durch Ansteuerung der Steuerventile 15, 25 kann das Sekundärsteuergerät 200 verschiedene Drucklevel einsteuern, so dass bei Ausfall der ersten Steuereinrichtung auf diese Weise das 1-Kanal-Druckregelmodul 11 und das 2-Kanal-Druckregelmodul 21 rein pneumatisch als Relaisventile betrieben werden.

Auf diese Weise können die Druckregelmodule 11, 21 bei Ausfall der ersten Steuereinrichtung von der zweiten Steuereinrichtung als Relaisventile mittelbar rein pneumatisch gesteuert werden.

Der dabei in die Bremsleitungen 17, 27, die die Ausgangskanäle der Druckregelmodule mit den Bremszylindern verbinden, eingesteuerte Druck kann dann von dem Sekundärsteuergerät 200 in Abhängigkeit von den Ausgangssignalen der Raddrehzahlsensoren 13, 23 durch Ansteuerung der Drucksteuerventile 12, 22 zur Ausbildung einer Antiblockierfunktion (ABS), Fahrdynamik-(ESP-)Regelung und/oder Antriebsschlupfregelung mittels Drucksenken, Druckhalten oder Drucksteigern bis zur Höhe des Basisdrucks gesteuert werden. Solange das Primärsteuergerät aktiv ist, schaltet das Sekundärsteuergerät 200 die Drehzahlüberwachung ab.

Mit diesem Ansatz können bekannte gattungsgemäße Bremsvorrichtunge nur durch Erweiterung mit bekannten, üblichen Komponenten, z. B. der Drucksteuerventile 22, der Steuerventile 15, 25 und einem Sekundärsteuergerät 200, so erweitert werden, dass ein elektrisches Backup-System zur Absicherung von Ausfällen des Primärsteuergeräts bereitgestellt wird, wobei eine vollwertige Antiblockierfunktion (ABS), Fahrdynamik-(ESP-)Regelung und/oder Antriebsschlupfregelung gewährleistet wird.

Wie vorstehend bereits angemerkt, kann es sich bei dem Sekundärsteuergerät 200 um ein im Vergleich zum EBS-Primärsteuergerät 100 um eine einfachere sog. ABS-Steuerung mit geringerem Funktionsumfang handeln. Eine derartige ABS-Steuerung erzeugt keine Soll-Druckvorgabe für ein Druckregelmodul, sondern lediglich einfache Steuersignale für die Drucksteuerventile (Magnetventile) 12, 22, um mittels Drucksenken, Druckhalten oder Drucksteigern bis zur Höhe des Basisdrucks die Bremswirkung zu steuern.

Die Bremsvorrichtung 1 weist neben den vorrangigen elektro-pneumatischen Bremskreisen nachrangige rein pneumatische Rückhaltkreise als unterlegte Sicherheitsebene auf.

Damit könnten auch bei Ausfall des Sekundärsteuergeräts 200 die Radbremsen rein pneumatisch gesteuert werden oder z. B. das Sekundärsteuergerät 200 mittels der **Wechselventile** 14 und 24 übersteuert werden. Über die Wechselventile 14, 24 kann der Fahrer manuell über das FBM 6 einen höheren Druck als das Sekundärsteuergerät 200 einsteuern, wenn der Fahrer doch rein pneumatisch bremsen will. Wenn z. B. über die Betätigung des FBMs 6 ein höherer Druck über die Druckleitung 14a am Wechselventil 14 anliegt als über die Druckleitung 14b, was vom Sekundärsteuergerät 200 über das Steuerventil 15 steuerbar ist, schaltet das Wechselventil 14 auf den Eingang an der Leitung 14a um, so dass der Druck der Leitung 14a in der pneumatischen Backup-Leitung 18 und am pneumatischen Steuereingang des 1-Kanal-Druckregelmoduls 11 anliegt. Entsprechendes gilt für das 2-Kanal-Druckregelmodul 21 und das Wechselventil 24.

Wie in Figur 1 zudem erkennbar ist, weist die Bremsvorrichtung 1 ferner ein Anhängersteuermodul 31 auf, mittels dessen die Bremsen eines Anhängers vom Zugfahrzeug aus pneumatisch steuerbar sind. Das Anhängersteuermodul 31 wird von einem dritten Bremskreis 30 versorgt. Das Sekundärsteuergerät 200 ist ausgebildet, das Anhängersteuermodul 31 über ein Steuerventil 32 pneumatisch zu steuern, das in einer pneumatischen Backup-Leitung des ersten Bremskreises zur Versorgung des Anhängersteuermoduls 31 angeordnet ist. Bei Ansteuerung des Anhängersteuermoduls 31 durch das Sekundärsteuergerät 200 dient dieses als Relaisventil, wobei dessen Steuerleitung 33 von der Vorderachse 2 des Zugfahrzeugs kommt. Der im Vorderachs-Kanal 18 des FBMs 6 erzeugte Vorderachs-Bremsdruck dient somit auch zur pneumatischen Steuerung des Anhängersteuermoduls 31. Durch Ansteuerung des Drucksteuerventils 32 kann auf die Höhe des Drucks zum Anhänger Einfluss genommen werden.

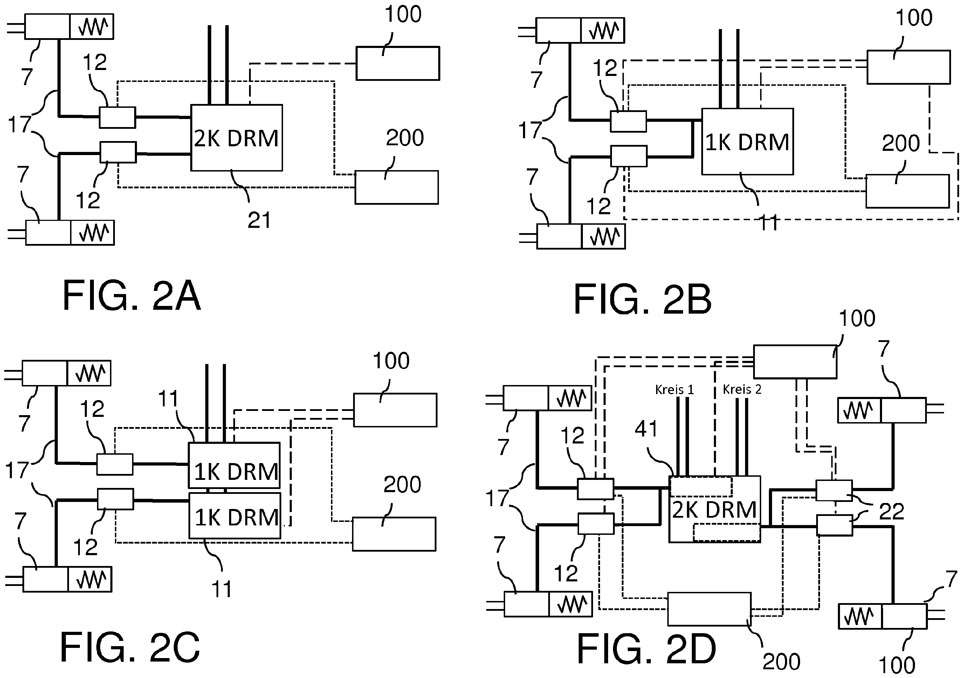

Die Bremsvorrichtung 1 gemäß Figur 1 mit einem 1-Kanal-Druckregelmodule an der Vorderachse und einem 2-Kanal-Druckregelmodul an der Hinterachse zeigt eine bevorzugte Ausführungsform, jedoch sind abweichend hiervon andere Ausführungsvarianten möglich, die in den Figuren 2A bis 2D in einer vereinfachten Darstellung skizziert sind.

Die Figuren 2A bis 2C zeigen Varianten der Ausführung des Druckregelmoduls, die sowohl für die Vorderachse als auch für die Hinterachse denkbar sind. Hierbei sind nur die für das Verständnis der unterschiedlichen Varianten zentralen Komponenten dargestellt und die anderen Komponenten, wie Raddrehzahlsensoren, FBM, Achsen, Räder, weitere Druckleitungen, elektrische Steuerleitungen, weggelassen. Mit dem Bezugszeichen 7 sind die Radbremszylinder bezeichnet.

So zeigt Figur 2A die Variante eines 2-Kanal-Druckregelmoduls 21, wie es in Figur 1 für die Hinterachse gezeigt ist. Ein 2-Kanal-Druckregelmodul 21 könnte jedoch auch an der Vorderachse eingesetzt werden, mit zwei Drucksteuerventilen 12, die nur von dem Sekundärsteuergerät angesteuert werden.

Figur 2B zeigt die Variante eines 1-Kanal-Druckregelmoduls 11, wie es in Figur 1 für die Vorderachse gezeigt ist. Ein 1-Kanal-Druckregelmodul 11 könnte jedoch auch an der Hinterachse eingesetzt werden, mit zwei Drucksteuerventilen 12, die vorrangig vom Primärsteuergerät 100 und nachrangig vom Sekundärsteuergerät 200 angesteuert werden.

Statt eines 2-Kanal-Druckregelmoduls könnten alternativ zwei 1-Kanal-Druckregelmodule für einen Bremskreis einer Achse zum Einsatz kommen, wie es in Figur 2C gezeigt ist. Die Verwendung zweier 1-Kanal-Druckregelmodule bietet die gleiche Funktionalität (zwei unabhängig steuerbare Ausgangskanäle) wie ein 2-Kanal-Druckregelmodul. Die Konfiguration kann an der Vorderachse und der Hinterachse eingesetzt werden. In der Bremsleitung 17 jedes 1-Kanal-Druckregelmoduls ist ein Drucksteuerventil 12 angeordnet, das nur von dem Sekundärsteuergerät 200 angesteuert wird. Bei vorrangiger Bremssteuerung durch das Primärsteuergerät sind die Drucksteuerventile 12 auf Durchfluss geschaltet.

Gemäß einer weiteren Ausführungsform, die in Figur 2D skizziert ist, kann ein 2-Kanal-Druckregelmodul für beide Achsen (Vorderachse und Hinterachse) eingesetzt werden. Das 2-Kanal-Druckregelmodul 41 ist in diesem Falle zweikreisig aufgebaut, mit einer ersten Versorgungsleitung für den ersten Bremskreis und einer hiervon getrennten Versorgungsleitung für den zweiten Bremskreis und einem ersten Kanal für die erste Achse und einem zweiten Kanal für die zweite Achse. Dies entspricht einer Kombination von zwei 1-Kanal-Druckregelmodulen, die zu einer baulichen Einheit zusammengefasst sind.

Die Erfindung soll nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Bremsvorrichtung
- 2: Vorderachse
- 3: Hinterachse
- 4: Rad der Vorderachse
- 5: Rad der Hinterachse
- 6: Fußbremsmodul
- 6a: elektrische Leitung
- 7: Bremszylinder
- 8: Vorratsleitung
- 9: Vorratsleitung
- 10: Erster Bremskreis
- 11: 1-Kanal -Druckregelmodul
- 12: Drucksteuerventil
- 13: Raddrehzahlsensor
- 14: Wechselventil
- 14a, 14b: Druckleitungen
- 15: Redundanzventil zur Druckansteuerung
- 16: Primäre Spannungsversorgung
- 17: Bremsleitung
- 18: Pneumatische Backup-Leitung
- 20: Zweiter Bremskreis
- 21: 2-Kanal -Druckregelmodul
- 22: Drucksteuerventil
- 23: Raddrehzahlsensor
- 24: Wechselventil
- 25: Redundanzventil zur Druckansteuerung
- 26: Sekundäre Spannungsversorgung
- 27: Bremsleitung
- 28: Pneumatische Backup-Leitung
- 30: Dritter Bremskreis
- 31: Anhängersteuermodul
- 32: Drucksteuerventil
- 33: Pneumatische Steuerleitung des Anhängersteuermoduls
- 41: Druckregelmodul
- 100: Erste Steuereinrichtung (primäre Steuereinrichtung des elektronischen Bremssystems)
- 200: Zweite Steuereinrichtung (ABS-Steuereinrichtung)

## Patentansprüche

1. Druckmittelbetätigte und zumindest teilweise elektronische Bremsvorrichtung (1) für ein Fahrzeug mit mindestens zwei Achsen (2, 3), insbesondere für ein Nutzfahrzeug, umfassend
einen ersten Bremskreis (10) mit mindestens einem ersten Druckregelmodul (11) zur Regelung der Bremsdrücke in Radbremsen der ersten Achse (2);
einen zweiten Bremskreis (20) mit mindestens einem zweiten Druckregelmodul (21) zur Regelung der Bremsdrücke in Radbremsen einer zweiten Achse (3);
einen Bremswertgeber (6) zur Erzeugung eines elektrischen Steuersignals;
eine erste Steuereinrichtung (100), die ausgebildet ist, in Abhängigkeit von dem vom Bremswertgeber (6) erzeugten Steuersignal und von Ausgangssignalen von Raddrehzahlsensoren (13, 23) Bremsdruckvorgaben für das erste und das zweite Druckregelmodul (11, 21) zu erzeugen;
wobei in dem ersten Bremskreis (10) und/oder dem zweiten Bremskreis (20) jeweils zwei Drucksteuerventile (12, 22) angeordnet und elektrisch ansteuerbar sind,
eine zweite Steuereinrichtung (200), die ausgebildet ist, lediglich bei Ausfall der ersten Steuereinrichtung (100) die zwei Drucksteuerventile (12) der ersten Achse (2) und/oder die zwei Drucksteuerventile (22) der zweiten Achse (3) in Abhängigkeit von Ausgangssignalen der Raddrehzahlsensoren (13, 23) zur Ausbildung einer Antiblockierfunktion (ABS), Fahrdynamik-(ESP-)Regelung und/oder Antriebsschlupfregelung anzusteuern.

2. Bremsvorrichtung (1) nach Anspruch 1, wobei das erste Druckregelmodul (11) und/oder das zweite Druckregelmodul (21) als ein 1-Kanal-Druckregelmodul zur achsweisen Regelung der Bremsdrücke in Radbremsen der zugeordneten Achse ausgebildet ist, welches einen gemeinsamen Bremsdruck für die Räder der zugeordneten Achse einregelt.

3. Bremsvorrichtung (1) nach einem der Ansprüche 1 oder 2, wobei das erste Druckregelmodul (11) und das zweite Druckregelmodul (21) als ein 1-Kanal-Druckregelmodul zur achsweisen Regelung der Bremsdrücke in Radbremsen der zugeordneten Achse ausgebildet sind, welche jeweils einen gemeinsamen Bremsdruck für die Räder der zugeordneten Achse einregeln, wobei das erste und zweite Druckregelmodul (11, 21) zu einer baulichen Einheit (41) zusammengefasst sind.

4. Bremsvorrichtung (1) nach Anspruch 1,
a) wobei im ersten Bremskreis (10) zwei Drucksteuerventile (12) angeordnet sind; wobei das erste Druckregelmodul (11) als ein 1-Kanal-Druckregelmodul zur achsweisen Regelung der Bremsdrücke in Radbremsen der zugeordneten Achse ausgebildet ist; welches einen gemeinsamen Bremsdruck für die Räder der zugeordneten Achse einregelt; wobei in zwei von dem 1-Kanal-Druckregelmodul ausgesteuerten Druckmittel-Bremsleitungen (17) jeweils eines der Drucksteuerventile (12) angeordnet ist; wobei die erste Steuereinrichtung (100) ausgebildet ist, die Drucksteuerventile (12) zur Ausbildung einer Antiblockierfunktion (ABS), Fahrdynamik-(ESP-)Regelung, und/oder Antriebsschlupfregelung anzusteuern; und/oder
b) wobei im zweiten Bremskreis (20) zwei Drucksteuerventile (22) angeordnet sind; wobei das zweite Druckregelmodul (21) als ein 1-Kanal-Druckregelmodul zur achsweisen Regelung der Bremsdrücke in Radbremsen der zugeordneten Achse ausgebildet ist; welches einen gemeinsamen Bremsdruck für die Räder der zugeordneten Achse einregelt; wobei in zwei von dem 1-Kanal-Druckregelmodul ausgesteuerten Druckmittel-Bremsleitungen (27) jeweils eines der Drucksteuerventile (22) angeordnet ist; wobei die erste Steuereinrichtung (100) ausgebildet ist, die Drucksteuerventile (22) zur Ausbildung einer Antiblockierfunktion (ABS), Fahrdynamik-(ESP-)Regelung, und/oder Antriebsschlupfregelung anzusteuern.

5. Bremsvorrichtung (1) nach Anspruch 1, wobei das mindestens eine zweite Druckregelmodul (21)
a) als ein 2-Kanal-Druckregelmodul zur radweisen Regelung der Bremsdrücke in Radbremsen der zugeordneten Achse ausgebildet ist, wobei je ein Kanal den Bremsdruck für einen Bremszylinder der zugeordneten Achse regelt; oder
b) als zwei 1-Kanal-Druckregelmodule zur radweisen Regelung der Bremsdrücke in Radbremsen der zugeordneten Achse ausgebildet sind, deren Kanal jeweils den Bremsdruck für einen Bremszylinder der zugeordneten Achse regelt.

6. Bremsvorrichtung (1) nach Anspruch 5, wobei im zweiten Bremskreis (20) zwei Drucksteuerventile (22) angeordnet sind, wobei in zwei vom 2-Kanal-Druckregelmodul oder in zwei von den beiden 1-Kanal-Druckregelmodulen ausgesteuerten Bremsleitungen (27) jeweils eines der von der zweiten Steuereinrichtung (200) angesteuerten Drucksteuerventile (22) angeordnet ist, wobei die erste Steuereinrichtung (100) vorzugsweise ausgebildet ist, zur Ausbildung einer Antiblockierfunktion (ABS), Fahrdynamik-(ESP-)Regelung, und/oder Antriebsschlupfregelung lediglich das 2-Kanal-Druckregelmodul oder die beiden 1-Kanal-Druckregelmodule anzusteuern, wobei die beiden Drucksteuerventile (22) fortlaufend auf Durchlassstellung geschaltet sind.

7. Bremsvorrichtung (1) nach einem der vorhergehenden Ansprüche, wobei
a) der erste Bremskreis (10) ein Vorderachsbremskreis und die erste Achse (2) eine Vorderachse ist und der zweite Bremskreis (20) ein Hinterachsbremskreis und die zweite Achse (3) eine Hinterachse ist; oder
b) der erste Bremskreis (10) ein Hinterachsbremskreis und die erste Achse (2) eine Hinterachse ist und der zweite Bremskreis (20) ein Vorderachsbremskreis und die zweite Achse (3) eine Vorderachse ist.

8. Bremsvorrichtung (1) nach einem der vorhergehenden Ansprüche, umfassend
a) ein von der zweiten Steuereinrichtung (200) elektrisch ansteuerbares erstes Steuerventil (15), das eingangsseitig mit einer Druckmittelquelle des ersten Bremskreises (10) fluidisch koppelbar ist und das ausgangsseitig mit einer Backup-Leitung (18) und/ oder pneumatischen Steuereingang des ersten Druckregelmoduls (11) koppelbar ist, und/oder
b) ein von der zweiten Steuereinrichtung (200) elektrisch ansteuerbares zweites Steuerventil (25), das eingangsseitig mit einer Druckmittelquelle des zweiten Bremskreises (20) fluidisch koppelbar ist und das ausgangsseitig mit einer Backup-Leitung (28) und/oder einem pneumatischen Steuereingang des zweiten Druckregelmoduls (21) koppelbar ist.

9. Bremsvorrichtung (1) nach Anspruch 8, wobei die zweite Steuereinrichtung (200) ausgebildet ist,
a) das erste Druckregelmodul (11) bei Ausfall der ersten Steuereinrichtung (100) mittelbar über das erste Steuerventil (15) rein pneumatisch als Relaisventil zu betreiben; und/oder
b) das zweite Druckregelmodul (21) bei Ausfall der ersten Steuereinrichtung (100) mittelbar über das zweite Steuerventil (25) rein pneumatisch als Relaisventil zu betreiben.

10. Bremsvorrichtung (1) nach einem der vorhergehenden Ansprüche, wobei die zweite Steuereinrichtung (200) eine von der ersten Steuereinrichtung (100) autonome Spannungsversorgung (26) aufweist.

11. Bremsvorrichtung (1) nach einem der vorhergehenden Ansprüche, wobei
a) weder das erste noch das zweite Druckregelmodul (11, 21) mit der zweiten Steuereinrichtung (200) zu einer baulichen Einheit zusammengefasst ist;
b) die zweite Steuereinrichtung (200) vorzugsweise nicht ausgebildet ist, ein vom Bremswertgeber (6) erzeugtes Steuersignal zu empfangen;
c) die zweite Steuereinrichtung (200) nicht ausgebildet ist, eine Bremsdruckvorgabe für das erste und/oder das zweite Druckregelmodul (11, 21)) zu erzeugen; und/oder
d) die zweite Steuereinrichtung (200) eine sog. ABS-Steuerung ist, die ausgebildet ist, die von einem Bremswertgeber (6) erzeugten Bremsdrücke für die Vorderachse und/ oder die Hinterachse jeweils durch die Drucksteuerventile fahrerunabhängig so zu verändern, dass lediglich eine rad- oder achsweise Bremsschlupfregelung (ABS) mittels Drucksenken, Druckhalten oder Drucksteigern bis zur Höhe des Basisdrucks verwirklicht werden kann.

12. Bremsvorrichtung (1) nach einem der vorhergehenden Ansprüche, wobei die Bremsvorrichtung (1) so ausgeführt ist, dass die Ausgangssignale der Drehzahlsensoren (13) der ersten Achse (2) primär am ersten Druckregelmodul (11) und sekundär an der zweiten Steuereinrichtung (200) eingelesen und die Ausgangssignale der Drehzahlsensoren (23) der zweiten Achse (3) primär am zweiten Druckregelmodul (21) und sekundär an der zweiten Steuereinrichtung (200) eingelesen werden.

13. Bremsvorrichtung (1) nach einem der vorhergehenden Ansprüche, wobei der Bremswertgeber (6)
a) ein Fußbremsventil oder Fußbremsmodul (6) umfasst, welches abhängig von einer Betätigung durch den Fahrer direkt Bremsdrücke für Radbremsen einer Achse und das elektrische Steuersignal erzeugt; und/oder
b) ein Fahrzeuglängsregelungssystem eines autonom betreibbaren Fahrzeugs ist.

14. Bremsvorrichtung (1) nach einem der vorhergehenden Ansprüche, ferner umfassend ein Anhängersteuermodul (31), mittels dessen die Bremsen eines Anhängers vom Zugfahrzeug aus pneumatisch steuerbar sind, wobei die zweite Steuereinrichtung (200) ausgebildet ist, das Anhängersteuermodul (31) über ein Steuerventil (32) pneumatisch zu steuern, das in einer pneumatischen Backup-Leitung des ersten oder zweiten Bremskreises (10, 20) zur Versorgung des Anhängersteuermoduls (31) angeordnet ist.

15. Kraftfahrzeug, insbesondere Nutzfahrzeug, mit einer Bremsvorrichtung (1) nach einem der vorhergehenden Ansprüche, das vorzugsweise in einem autonomen Fahrmodus betreibbar ist.

## Claims

1. A brake device (1), which is actuated by pressure medium and is at least partially electronic, for a vehicle having at least two axles (2, 3), in particular for a utility vehicle, comprising
a first brake circuit (10) having at least one first pressure-regulating module (11) for regulating the brake pressures in wheel brakes of the first axle (2);
a second brake circuit (20) having at least one second pressure-regulating module (21) for regulating the brake pressures in wheel brakes of a second axle (3);
a brake value transmitter (6) for generating an electric control signal;
a first control device (100) which is designed to generate brake pressure specifications for the first and the second pressure-regulating module (11, 21) depending on the control signal generated by the brake value transmitter (6) and on output signals of wheel rotational speed sensors (13, 23);
wherein in each case two pressure control valves (12, 22) are arranged in the first brake circuit (10) and/or in the second brake circuit (20) and are electrically activatable,
a second control device (200) which is designed, only in the event of failure of the first control device (100), to activate the two pressure control valves (12) of the first axle (2) and/or the two pressure control valves (22) of the second axle (3) depending on output signals of the wheel rotational speed sensors (13, 23) in order to form an anti-lock function (ABS), driving dynamics (ESP) control and/or traction control.

2. The brake device (1) according to Claim 1, wherein the first pressure-regulating module (11) and/or the second pressure-regulating module (21) is designed as a one-channel pressure-regulating module for axle-by-axle regulation of the brake pressures in wheel brakes of the associated axle, which adjusts a common brake pressure for the wheels of the associated axle.

3. The brake device (1) according to either of Claims 1 and 2, wherein the first pressure-regulating module (11) and the second pressure-regulating module (21) are designed as a one-channel pressure-regulating module for axle-by-axle regulation of the brake pressures in wheel brakes of the associated axle, which each adjust a common brake pressure for the wheels of the associated axle, wherein the first and second pressure-regulating module (11, 21) are combined to form a structural unit (41).

4. The brake device (1) according to Claim 1,
a) wherein two control valves (12) are arranged in the first brake circuit (10); wherein the first pressure-regulating module (11) is designed as a one-channel pressure-regulating module for axle-by-axle regulation of the brake pressures in wheel brakes of the associated axle; which adjusts a common brake pressure for the wheels of the associated axle; wherein in each case one of the pressure control valves (12) is arranged in two pressure medium brake lines (17) controlled by the one-channel pressure-regulating module; wherein the first control device (100) is designed to activate the pressure control valves (12) in order to form an anti-lock function (ABS), driving dynamics (ESP) control and/or traction control; and/or
b) wherein two pressure control valves (22) are arranged in the second brake circuit (20); wherein the second pressure-regulating module (21) is designed as a one-channel pressure-regulating module for axle-by-axle regulation of the brake pressures in wheel brakes of the associated axle; which adjusts a common brake pressure for the wheels of the associated axle; wherein in each case one of the pressure control valves (22) is arranged in two pressure medium brake lines (27) controlled by the one-channel pressure-regulating module; wherein the first control device (100) is designed to activate the pressure control valves (22) in order to form an anti-lock function (ABS), driving dynamics (ESP) control and/or traction control.

5. The brake device (1) according to Claim 1, wherein the at least one second pressure-regulating module (21)
a) is designed as a two-channel pressure-regulating module for wheel-by-wheel regulation of the brake pressures in wheel brakes of the associated axle, wherein in each case one channel regulates the brake pressure for a brake cylinder of the associated axle; or
b) is designed as two one-channel pressure-regulating modules for wheel-by-wheel regulation of the brake pressures in wheel brakes of the associated axle, the channel of which in each case regulates the brake pressure for a brake cylinder of the associated axle.

6. The brake device (1) according to Claim 5, wherein two pressure control valves (22) are arranged in the second brake circuit (20), wherein in each case one of the pressure control valves (22) activated by the second control device (200) is arranged in two brake lines (27) controlled by the two-channel pressure-regulating module or in two brake lines (27) controlled by the two one-channel pressure-regulating modules, wherein the first control device (100) is preferably designed to activate only the two-channel pressure-regulating module or the two one-channel pressure-regulating modules in order to form an anti-lock function (ABS), driving dynamics (ESP) control and/or traction control, wherein the two pressure control valves (22) are switched continuously to a passthrough position.

7. The brake device (1) according to one of the preceding claims, wherein
a) the first brake circuit (10) is a front axle brake circuit and the first axle (2) is a front axle, and the second brake circuit (20) is a rear axle brake circuit and the second axle (3) is a rear axle; or
b) the first brake circuit (10) is a rear axle brake circuit and the first axle (2) is a rear axle, and the second brake circuit (20) is a front axle brake circuit and the second axle (3) is a front axle.

8. The brake device (1) according to one of the preceding claims, comprising
a) a first control valve (15) which is electrically activatable by the second control device (200), is fluidically couplable on the input side to a pressure medium source of the first brake circuit (10) and is couplable on the output side to a backup line (18) and/or to a pneumatic control input of the first pressure-regulating module (11), and/or
b) a second control value (25) which is electrically activatable by the second control device (200), is fluidically couplable on the input side to a pressure medium source of the second brake circuit (20) and is couplable on the output side to a backup line (28) and/or to a pneumatic control input of the second pressure-regulating module (21).

9. The brake device (1) according to Claim 8, wherein the second control device (200) is designed
a) in the event of failure of the first control device (100) to operate the first pressure-regulating module (11) indirectly via the first control valve (15) purely pneumatically as a relay valve; and/or
b) in the event of failure of the first control device (100) to operate the second pressure-regulating module (21) indirectly via the second control valve (25) purely pneumatically as a relay valve.

10. The brake device (1) according to one of the preceding claims, wherein the second control device (200) has a voltage supply (26) which is autonomous from the first control device (100).

11. The brake device (1) according to one of the preceding claims, wherein
a) neither the first nor the second pressure-regulating module (11, 21) is combined with the second control device (200) to form a structural unit;
b) the second control device (200) is preferably not designed to receive a control signal generated by the brake value transmitter (6);
c) the second control device (200) is not designed to generate a brake pressure specification for the first and/or the second pressure-regulating module (11, 21); and/or
d) the second control device (200) is what is referred to as an ABS control which is designed to change the brake pressures, generated by a brake value transmitter (6), for the front axle and/or the rear axle in each case by the pressure control valves independently of the driver in such a manner that only a wheel-by-wheel or axle-by-axle brake slip control (ABS) can be brought about by means of reducing pressure, maintaining pressure or increasing pressure up to the magnitude of the basic pressure.

12. The brake device (1) according to one of the preceding claims, wherein the brake device (1) is designed in such a manner that the output signals of the rotational speed sensors (13) of the first axle (2) are read primarily at the first pressure-regulating module (11) and secondarily at the second control device (200), and the output signals of the rotational speed sensors (23) of the second axle (3) are read primarily at the second pressure-regulating module (21) and secondarily at the second control device (200).

13. The brake device (1) according to one of the preceding claims, wherein the brake value transmitter (6)
a) comprises a foot brake valve or foot brake module (6) which, depending on an actuation by the driver, directly generates brake pressures for wheel brakes of an axle, and directly generates the electric control signal; and/or
b) is a vehicle longitudinal control system of an autonomously operable vehicle.

14. The brake device (1) according to one of the preceding claims, furthermore comprising a trailer control module (31) by means of which the brakes of a trailer are pneumatically controllable from the towing vehicle, wherein the second control device (200) is designed to pneumatically control the trailer control module (31) via a control valve (32) which is arranged in a pneumatic backup line of the first or second brake circuit (10, 20) for supply of the trailer control module (31) .

15. A motor vehicle, in particular utility vehicle, having a brake device (1) according to one of the preceding claims, which is preferably operable in an autonomous driving mode.

## Revendications

1. Dispositif de freinage (1) au moins partiellement électronique et actionné par un fluide sous pression, destiné à un véhicule doté d'au moins deux essieux (2, 3), en particulier à un véhicule utilitaire, comprenant
un premier circuit de freinage (10) doté d'au moins un premier module de régulation de pression (11) pour réguler les pressions de freinage dans des freins de roue du premier essieu (2) ;
un deuxième circuit de freinage (20) doté d'au moins un deuxième module de régulation de pression (21) pour réguler les pressions de freinage dans des freins de roue d'un deuxième essieu (3) ;
un transmetteur de valeur de freinage (6) pour produire un signal de commande électrique ;
un premier dispositif de commande (100) qui est réalisé pour produire, en fonction du signal de commande produit par le transmetteur de valeur de freinage (6) et de signaux de sortie de capteurs de vitesse de rotation de roue (13, 23), des spécifications de pression de freinage pour le premier et le deuxième module de régulation de pression (11, 21) ;
dans lequel, dans le premier circuit de freinage (10) et/ou le deuxième circuit de freinage (20), respectivement deux soupapes de commande de pression (12, 22) sont disposées et peuvent être pilotées électriquement,
un deuxième dispositif de commande (200) qui est réalisé pour piloter uniquement en cas de défaillance du premier dispositif de commande (100) les deux soupapes de commande de pression (12) du premier essieu (2) et/ou les deux soupapes de commande de pression (22) du deuxième essieu (3) en fonction de signaux de sortie des capteurs de vitesse de rotation de roue (13, 23) pour réaliser une fonction antiblocage (ABS), une régulation de la dynamique de conduite (ESP) et/ou une régulation du patinage.

2. Dispositif de freinage (1) selon la revendication 1, dans lequel le premier module de régulation de pression (11) et/ou le deuxième module de régulation de pression (21) sont réalisés sous la forme d'un module de régulation de pression à 1 canal pour une régulation par essieu des pressions de freinage dans les freins de roue de l'essieu associé, qui règle une pression de freinage commune pour les roues et l'essieu associé.

3. Dispositif de freinage (1) selon l'une quelconque des revendications 1 et 2, dans lequel le premier module de régulation de pression (11) et le deuxième module de régulation de pression (21) sont réalisés sous la forme d'un module de régulation de pression à 1 canal pour la régulation par essieu des pressions de freinage dans les freins de roue de l'essieu associé, qui régulent respectivement une pression de freinage commune pour les roues de l'essieu associé, le premier et le deuxième module de régulation de pression (11, 21) étant regroupés en une unité constructive (41).

4. Dispositif de freinage (1) selon la revendication 1,
a) deux soupapes de commande de pression (12) étant disposées dans le premier circuit de freinage (10) ; le premier module de régulation de pression (11) étant réalisé sous la forme d'un module de régulation de pression à 1 canal pour la régulation par essieu des pressions de freinage dans les freins de roue de l'essieu associé ; qui règle une pression de freinage commune pour les roues de l'essieu associé ; dans lequel respectivement l'une des soupapes de commande de pression (12) est disposée dans deux conduites de frein de fluide sous pression (17) réglées par le module de régulation de pression à 1 canal ; le premier dispositif de commande (100) étant réalisé pour piloter les soupapes de commande de pression (12) pour réaliser une fonction antiblocage (ABS), une régulation de la dynamique de conduite (ESP), et/ou une régulation du patinage ; et/ou
b) deux soupapes de commande de pression (22) étant disposées dans le deuxième circuit de freinage (20) ; le deuxième module de régulation de pression (21) étant réalisé sous la forme d'un module de régulation de pression à 1 canal pour la régulation par essieu des pressions de freinage dans les freins de roue de l'essieu associé ; qui règle une pression de freinage commune pour les roues de l'essieu associé ; dans lequel respectivement l'une des soupapes de commande de pression (22) est disposée dans deux conduites de frein de fluide sous pression (27) réglées par le module de régulation de pression à 1 canal ; le premier dispositif de commande (100) étant réalisé pour piloter les soupapes de commande de pression (22) pour réaliser une fonction antiblocage (ABS), une régulation de la dynamique de conduite (ESP), et/ou une régulation du patinage.

5. Dispositif de freinage (1) selon la revendication 1, dans lequel ledit au moins un deuxième module de régulation de pression (21)
a) est réalisé sous la forme d'un module de régulation de pression à 2 canaux pour la régulation par roue des pressions de freinage dans les freins de roue de l'essieu associé, respectivement un canal régulant la pression de freinage pour un cylindre de frein de l'essieu associé ; ou
b) est réalisé sous la forme de deux modules de régulation de pression à 1 canal pour la régulation par roue des pressions de freinage dans les freins de roue de l'essieu associé dont le canal régule respectivement la pression de freinage pour un cylindre de frein de l'essieu associé.

6. Dispositif de freinage (1) selon la revendication 5, dans lequel deux soupapes de commande de pression (22) sont disposées dans le deuxième circuit de freinage (20), dans lequel respectivement l'une des soupapes de commande de pression (22) pilotées par le deuxième dispositif de commande (200) est disposée dans deux conduites de pression (27) réglées par le module de régulation de pression à 2 canaux ou dans deux conduites de pression (27) réglées par les deux modules de régulation de pression à 1 canal, le premier dispositif de commande (100) étant de préférence réalisé, en vue de la réalisation d'une fonction antiblocage (ABS), d'une régulation de la dynamique de conduite (ESP), et/ou d'une régulation du patinage, pour piloter uniquement le module de régulation de pression à 2 canaux ou les deux modules de régulation de pression à 1 canal, les deux soupapes de commande de pression (22) étant commutées en continu sur la position de passage.

7. Dispositif de freinage (1) selon l'une quelconque des revendications précédentes, dans lequel
a) le premier circuit de freinage (10) est un circuit de freinage d'essieu avant et le premier essieu (2) est un essieu avant, et le deuxième circuit de freinage (20) est un circuit d'essieu arrière et le deuxième essieu (3) est un essieu arrière ; ou
b) le premier circuit de freinage (10) est un circuit de freinage d'essieu arrière et le premier essieu (2) est un essieu arrière, et le deuxième circuit de freinage (20) est un circuit de freinage d'essieu avant et le deuxième essieu (3) est un essieu avant.

8. Dispositif de freinage (1) selon l'une quelconque des revendications précédentes, comprenant
a) une première soupape de commande (15) pouvant être pilotée électriquement par le deuxième dispositif de commande (200) et qui peut être accouplée côté entrée en communication fluidique avec une source de fluide sous pression du premier circuit de freinage (10) et qui peut être accouplée côté sortie avec une conduite de secours (18) et/ou une entrée de commande pneumatique du premier module de régulation de pression (11), et/ou
b) une deuxième soupape de commande (25) pouvant être pilotée électriquement par le deuxième dispositif de commande (200) et qui peut être accouplée côté entrée en communication fluidique avec une source de fluide sous pression du deuxième circuit de freinage (20) et qui peut être accouplée côté sortie avec une conduite de secours (28) et/ou une entrée de commande pneumatique du deuxième module de régulation de pression (21).

9. Dispositif de freinage (1) selon la revendication 8, dans lequel le deuxième dispositif de commande (200) est réalisé pour
a) faire fonctionner le premier module de régulation de pression (11) en cas de défaillance du premier dispositif de commande (100) indirectement par l'intermédiaire de la première soupape de commande (15) de manière purement pneumatique comme une soupape relais ; et/ou
b) faire fonctionner le deuxième module de régulation de pression (21) en cas de défaillance du premier dispositif de commande (100) indirectement par l'intermédiaire de la deuxième soupape de commande (25) de manière purement pneumatique comme une soupape relais.

10. Dispositif de freinage (1) selon l'une quelconque des revendications précédentes, dans lequel le deuxième dispositif de commande (200) présente une alimentation en tension (26) autonome par rapport au premier dispositif de commande (100).

11. Dispositif de freinage (1) selon l'une quelconque des revendications précédentes, dans lequel
a) ni le premier ni le deuxième module de régulation de pression (11, 21) n'est regroupé en une unité constructive avec le deuxième dispositif de commande (200) ;
b) le deuxième dispositif de commande (200) n'est de préférence pas réalisé pour recevoir un signal de commande produit par le transmetteur de valeur de freinage (6) ;
c) le deuxième dispositif de commande (200) n'est pas réalisé pour produire une spécification de pression de freinage pour le premier et/ou le deuxième module de régulation de pression (11, 21) ; et/ou
d) le deuxième dispositif de commande (200) est une commande dite ABS qui est réalisée pour faire varier les pressions de freinage produites par un transmetteur de valeur de freinage (6) pour l'essieu avant et/ou l'essieu arrière respectivement par l'intermédiaire des soupapes de commande de pression indépendamment du conducteur de telle sorte que seule une régulation du patinage (ABS) par roue ou par essieu peut être réalisée en diminuant la pression, en maintenant la pression ou en augmentant la pression jusqu'au niveau de la pression de base.

12. Dispositif de freinage (1) selon l'une quelconque des revendications précédentes, dans lequel le dispositif de freinage (1) est réalisé de telle sorte que les signaux de sortie des capteurs de vitesse de rotation (13) du premier essieu (2) sont lus primairement au premier module de régulation de pression (11) et secondairement au deuxième dispositif de commande (200), et les signaux de sortie des capteurs de vitesse de rotation (23) du deuxième essieu (3) sont lus primairement au deuxième module de régulation de pression (21) et secondairement au deuxième dispositif de commande (200).

13. Dispositif de freinage (1) selon l'une quelconque des revendications précédentes, dans lequel le transmetteur de valeur de freinage (6)
a) comprend une soupape de pédale de frein ou un module de pédale de frein qui produit directement des pressions de freinage pour les freins de roue d'un essieu et le signal de commande électrique en fonction d'un actionnement par le conducteur ; et/ou
b) est un système de régulation longitudinale de véhicule d'un véhicule pouvant fonctionner de manière autonome.

14. Dispositif de freinage (1) selon l'une quelconque des revendications précédentes, comprenant en outre un module de commande de remorque (31) au moyen duquel le freinage d'une remorque peut être commandé de manière pneumatique à partir du véhicule tracteur, le deuxième dispositif de commande (200) étant réalisé pour commander de manière pneumatique le module de commande de remorque (31) par l'intermédiaire d'une soupape de commande (32) qui est disposée dans une conduite de secours pneumatique du premier ou deuxième circuit de freinage (10, 20) pour alimenter le module de commande de remorque (31).

15. Véhicule automobile, en particulier véhicule utilitaire, comprenant un dispositif de freinage (1) selon l'une quelconque des revendications précédentes qui peut de préférence fonctionner dans un mode de conduite autonome.
